## Europäisches Patentamt
## European Patent Office
## Office européen des brevets

(19)

(11) Veröffentlichungsnummer : **0 116 722**
**B1**

(12) **EUROPÄISCHE PATENTSCHRIFT**

(45) Veröffentlichungstag der Patentschrift :
15.04.87

(51) Int. Cl.⁴ : **B 62 D 33/04**

(21) Anmeldenummer : 83113267.5

(22) Anmeldetag : 31.12.83

(54) **Vorrichtung zum gleichzeitigen Öffnen bzw. Schliessen eines unteren und eines oberen Wandteiles einer Bordwand.**

(30) Priorität : 26.01.83 DE 3302527
25.11.83 DE 3342646

(43) Veröffentlichungstag der Anmeldung :
29.08.84 Patentblatt 84/35

(45) Bekanntmachung des Hinweises auf die Patenterteilung : 15.04.87 Patentblatt 87/16

(84) Benannte Vertragsstaaten :
AT BE CH FR GB IT LI LU NL SE

(56) Entgegenhaltungen :
DE-A- 2 710 141
DE-B- 2 358 186
DE-C- 2 813 593
DE-U- 8 204 871
US-A- 2 591 050

(73) Patentinhaber : TREFA - Jürgen Nichts Karosserie- und Fahrzeugtechnik GmbH & Co KG
Niederkircherstrasse 4
D-5500 Trier (DE)

(72) Erfinder : Tibio, Dietrich
Trierer Strasse 13
D-5501 Franzenheim (DE)

(74) Vertreter : Schönherr, Wolfgang et al
Patentanwälte Wolfgang Schönherr Dipl.-Ing. Karl-Heinz Serwe Hawstrasse 28
D-5500 Trier (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum gleichzeitigen Öffnen bzw. Schließen eines unteren und eines oberen Wandteiles einer Bordwand, insbesondere der Bordwand eines Lastfahrzeuges, wobei das untere Wandteil um eine untere Schwenkachse nach unten schwenkbar ist und das darüber angeordnete obere Wandteil nach oben aufklappbar und an seinem unteren Randabschnitt gelenkig mit Hebeln verbunden ist, die jeweils um zur Schwenkachse parallele Drehachsen drehbar an seitlichen Stützen angeordnet sind, und wobei ein das untere und das obere Wandteil verbindendes Zugmittel über an den Stützen angeordnete obere und untere Umlenkelemente verschiebbar geführt ist, das mit seinem unteren Endabschnitt mit dem unteren Wandteil im Abstand von dessen Schwenkachse und mit seinem oberen Endabschnitt mit dem Hebeln im Abstand von deren Drehachse verbunden ist und wobei die Drehachsen zwischen oberen und unteren Umlenkelementen angeordnet sind.

Aus der DE-C-2 813 593 ist eine derartige Vorrichtung bekannt, bei der als Zugmittel ein Zugseil vorgesehen ist, das in der Nähe der Drehachse der Hebel mit den Hebeln verbunden ist und über Umlenkelemente an den Stützen verläuft. Damit ein vollständiges Öffnen der Wandteile gewährleistet ist, insbesondere des oberen Wandteiles, ist an den Stützen und den Hebeln jeweils ein weiteres Umlenkelement vorgesehen. Diese zusätzlichen Umlenkelemente an den Stützen und Hebeln sollen bewirken, daß die Hebel vollständig in die Stützen hineingeschwenkt werden und dadurch das obere Wandteil vollständig geöffnet wird.

Bei dieser Anordnung ist jedoch nachteilig, daß durch die zahlreichen Umlenkelemente eine große Reibung auftritt. Nachteilig ist weiterhin, daß diese Umlenkelemente sehr viel Platz beanspruchen, so daß die Stützen, die diese Umlenkelemente und das Seil aufnehmen, eine bestimmte Größe aufweisen müssen.

Die Aufgabe der Erfindung besteht daher darin, eine Vorrichtung der eingangs genannten Art derart weiterzubilden, daß bei minimalem Platzbedarf ein sicheres, vollständiges Öffnen und Schließen des unteren und des oberen Wandteiles einer Bordwand eines Lastfahrzeuges gewährleistet ist, wobei nur ein geringer Kraftaufwand zum Öffnen und Schließen der Bordwände notwendig ist und der Verschleiß und die Wartungsbedürftigkeit der Vorrichtung sehr gering ist.

Diese Aufgabe wird dadurch gelöst, daß das Zugmittel als Gliederkette ausgebildet ist, die über einen einzigen oberen Umlenkstift geführt ist, und daß jeweils das obere Ende der Gliederkette mit dem zugeordneten Hebel in einem Abstand von den Drehachsen der Hebel verbunden ist, der etwa um die Länge des letzten Kettengliedes größer als der Abstand des oberen Umlenkelementes von den Drehachsen ist.

Vorzugsweise ist jeweils ein unterer Umlenkstift, eine untere Führungsrolle, eine untere Umlenkrolle od. dgl. im Abstand oberhalb der Schwenkachse des unteren Wandteiles angeordnet, der größer als der Abstand des Befestigungspunktes des unteren Kettenendes von der Schwenkachse des unteren Wandteiles ist.

Die Gliederkette ist vorteilhaft als Rollengliederkette ausgebildet. Vorzugsweise sind die Umlenkstifte als die Gliederkette führende Führungsritzel ausgebildet.

Vorzugsweise sind die Zahnritzel mit ihren Drehachsen, die Umlenkstifte, die Umlenkrollen, die Führungsritzel und die Gliederkette im Innern der Stützen angeordnet.

Bei einer vorteilhaften Ausführungsform ist das obere Wandteil an seinem oberen Wandabschnitt durch ein Gelenk mit einem Schlitten, einem Rollwagen od. dgl. verbunden, der in oberen, seitlichen Schienen verschiebbar geführt ist, weist der Rollwagen zwei hintereinander angeordnete Rollensätze auf und ist das Gelenk auf der Mittellinie zwischen den Rollensätzen angeordnet.

Die Erfindung ist in den Zeichnungen beispielhaft dargestellt. Es zeigen :

Figur 1   die erfindungsgemäße Vorrichtung im Schnitt durch das untere und das obere Wandteil einer Bordwand eines Lastfahrzeuges bei geschlossener Bordwand,

Figur 2   die Vorrichtung nach Fig. 1 bei teilweise geöffneter Bordwand,

Figur 3   das obere Wandteil mit Hebel im Detail in geschlossenem Zustand in Seitenansicht,

Figur 4   das obere Wandteil nach Fig. 3 in Draufsicht,

Figur 5   das obere Wandteil mit Hebel im Detail in geöffnetem Zustand in Seitenansicht,

Figur 6   eine andere Ausführungsform der Vorrichtung mit dem oberen Wandteil mit Hebel im Detail in geschlossenem und teilweise geöffnetem Zustand in Seitenansicht,

Figur 7   das obere Wandteil der Ausführungsform nach Fig. 6 in geöffnetem Zustand in Seitenansicht,

Figur 8   einen Rollwagen des oberen Wandteiles in Seitenansicht und

Figur 9   den Rollwagen des oberen Wandteiles nach Fig. 8 in Draufsicht.

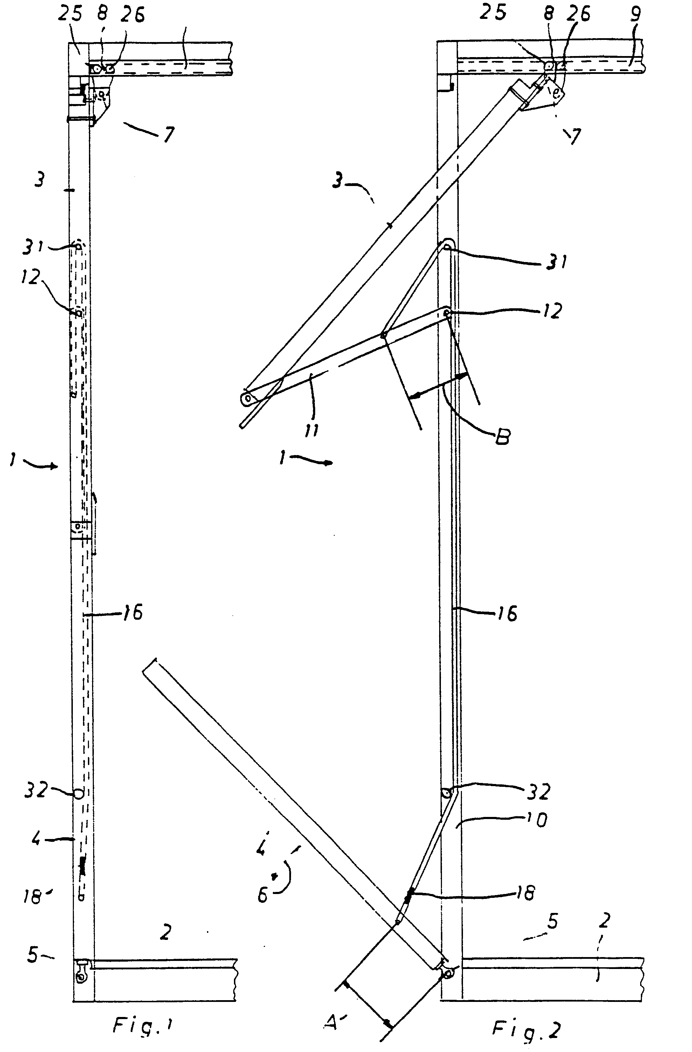

Nach den Fig. 1 bis 7 weist eine Bordwand 1 eines Lastfahrzeuges 2 ein oberes Wandteil 3 und ein unteres Wandteil 4 auf. Das untere Wandteil 4 ist um eine untere, am Lastfahrzeug 2 befestigte Schwenkachse 5 in Richtung des mit 6 in Fig. 2 bezeichneten Pfeiles nach unten schwenkbar.

Das obere Wandteil 3 ist an seinem oberen Randabschnitt durch ein Gelenk 7 mit einem Rollwagen 8 verbunden, der in oberen, seitlichen und etwa in horizontaler Richtung verlaufenden Schienen 9 verschiebbar geführt ist, die von seitlich neben der Bordwand angeordneten, in lotrechter Richtung verlaufenden Stützen 10 des Lastfahrzeuges 2 gehalten ist.

Wie weiterhin Fig. 2 erkennen läßt, ist das obere Wandteil (3) an seinem unteren Randabschnitt gelenkig mit Hebeln (11) verbunden, die jeweils um zur Schwenkachse (3) parallele Drehachsen (12) drehbar an den seitlichen Stützen (10) angeordnet sind.

Weiterhin ist im Innern der Stützen (10) eine Gliederkette (16) über einen oberen Umlenkstift (31) und einen unteren Umlenkstift (32) verschiebbar geführt, die mit ihrem unteren Ende mit dem unteren Wandteil (4) im Abstand (A) von der Schwenkachse (5) und mit ihrem oberen Endabschnitt im Abstand (B) von der Drehachse (12) mit den Hebeln (11) verbunden ist. In der Gliederkette (16) ist nahe dem unteren Endabschnitt eine Spannhülse (18) angeordnet, mit der die wirksame Länge der Gliederkette einstellbar ist.

Wie die Fig. 2 zeigt, wird durch Schwenken der unteren Bordwand (4) in Richtung des mit (6) bezeichneten Pfeiles nach unten die Gliederkette (16) um den unteren Umlenkstift (32) nach unten bewegt. Dadurch zieht die Gliederkette (16) über den oberen Umlenkstift (31) umgelenkt die Hebel (11) und damit das obere Wandteil (3) nach oben, wobei der Rollwagen (8) in den Schienen (9) nach hinten läuft.

Durch die Verwendung der Gliederkette sind kleinste Umlenkradien an den Umlenkstiften (31) und (32) möglich, so daß die in den Stützen (10) angeordnete Vorrichtung eine sehr kleine Bauform aufweist.

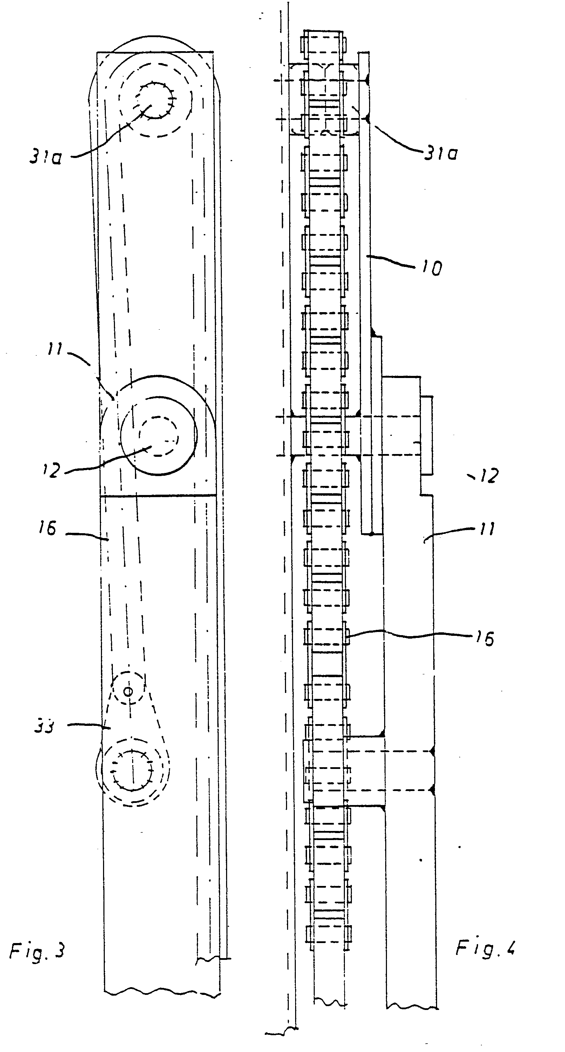

Bei der Ausführungsform nach den Fig. 3 bis 5 sind der obere und der nicht gezeigte untere Umlenkstift als Umlenkrolle (31a) ausgebildet, wodurch die Reibung verringert wird. Wie insb. die Fig. 5 erkennen läßt, ist das obere Kettenende der Gliederkette (16) mit dem zugeordneten Hebel (11) in einem Abstand (B) von der Drehachse (12) des Hebels verbunden, der etwa um die Länge (L) des letzten Kettengliedes (33) größer als der Abstand (B) der oberen Umlenkrolle (31a) von der Drehachse (12) ist. Dadurch wird der Hebel (11) von der Gliederkette (16) beim Öffnen vollständig in die Stütze (10) hineingezogen, wie dies insb. die Fig. 5 darstellt.

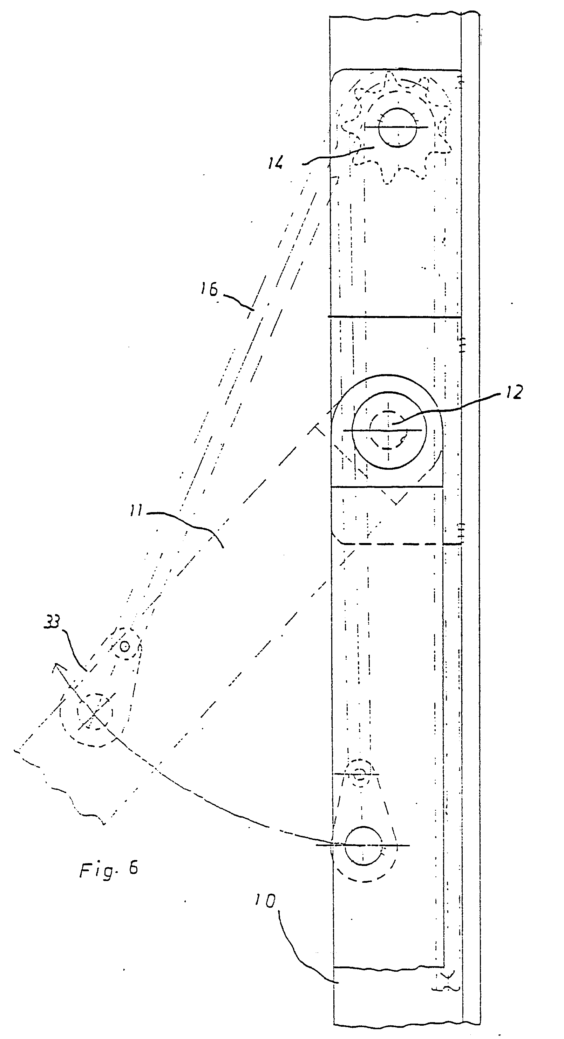

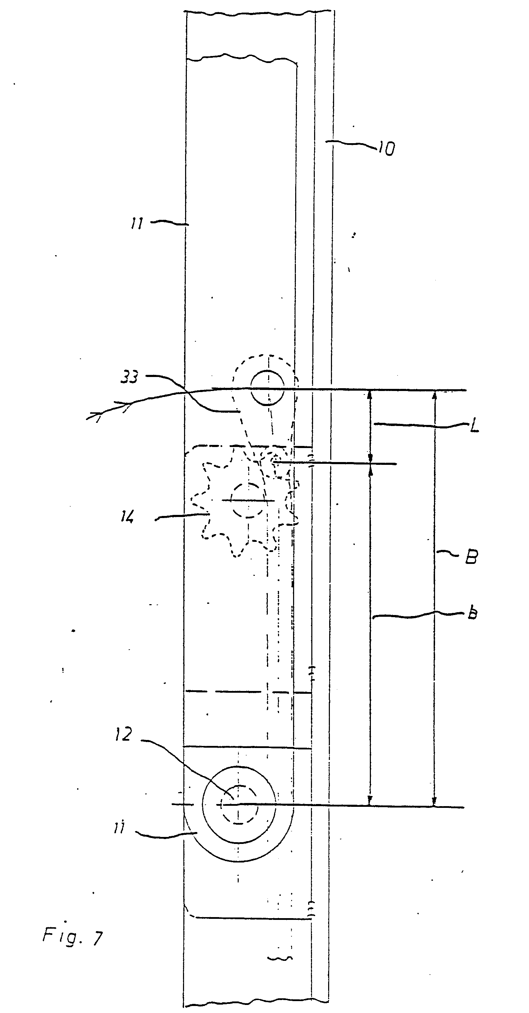

Gleiches gilt für die Ausführungsform nach den Fig. 6 und 7. Bei dieser Ausführungsform sind der obere und der nicht gezeigte untere Umlenkstift als Führungsritzel (14) ausgebildet. Dadurch wird ein ruhiger Lauf der Gliederkette und eine sichere Führung der Gliederkette bewirkt.

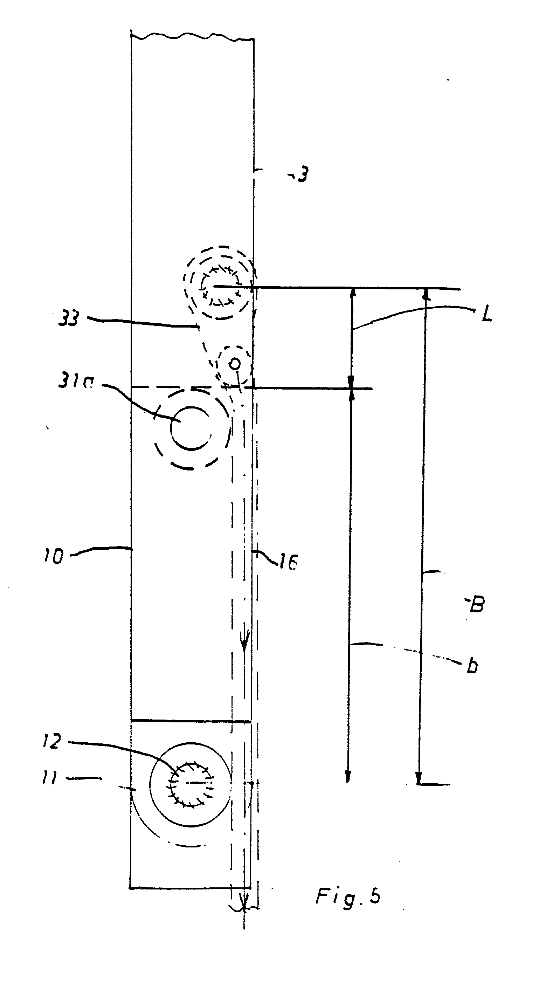

Durch die Ausbildung der Gliederkette (16) als Rollengliederkette (Fig. 4) wird die Reibung weiter verringert.

Wie die Fig. 2 erkennen läßt, ist der untere Umlenkstift (32) in einem Abstand oberhalb der Schwenkachse (5) des unteren Wandteiles (4) angeordnet, der größer als der Abstand (A) des Befestigungspunktes des unteren Kettenendes von der Schwenkachse des unteren Wandteiles ist. Dadurch wird ein vollständiges Schließen des unteren Wandteiles (4) gewährleistet, wie dies in Fig. 1 dargestellt ist.

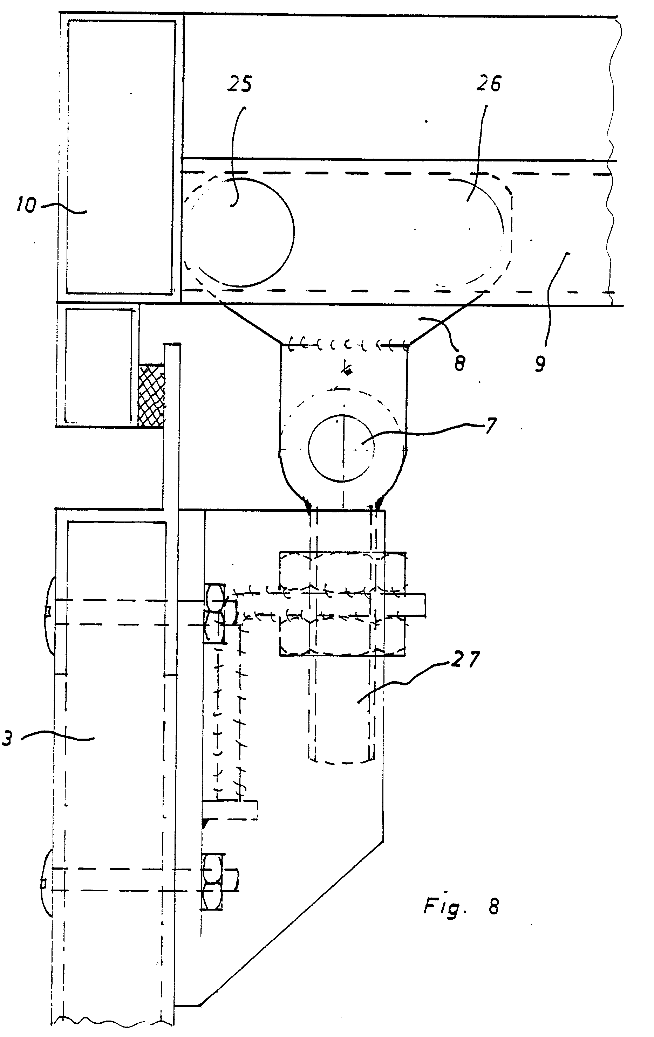

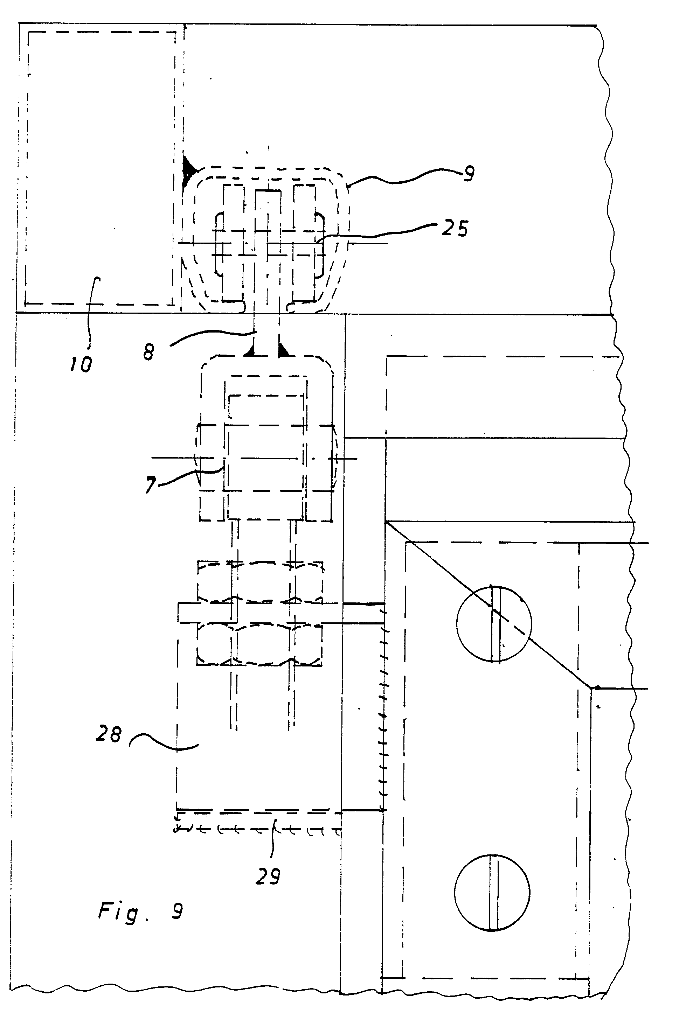

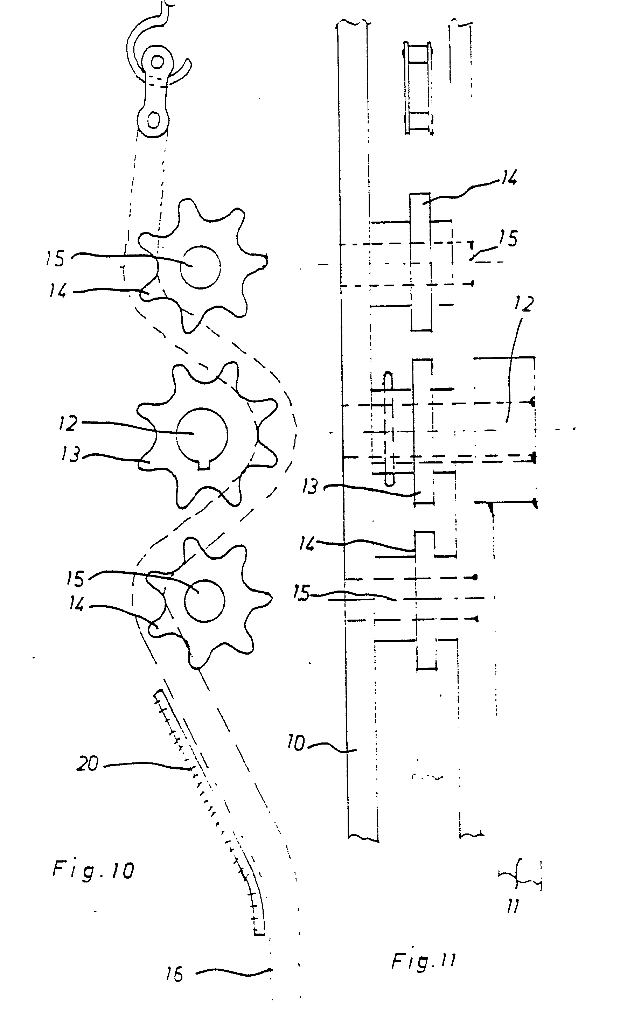

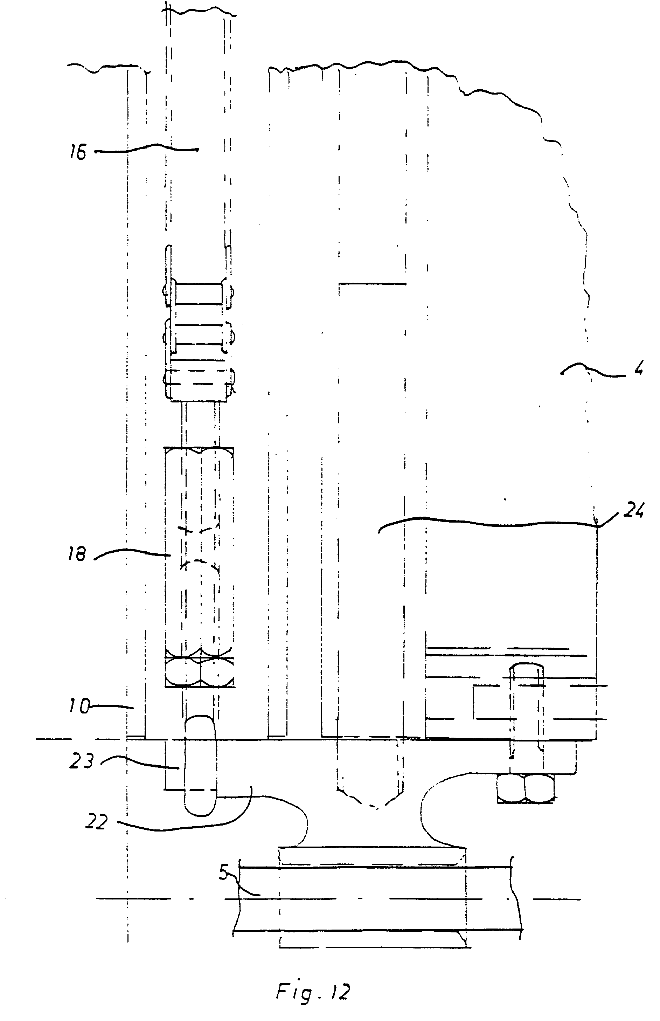

Nach den Fig. 8 und 9 weist der in den Schienen (9) geführte Rollwagen (8) zwei hintereinander angeordnete Rollensätze (25) und (26) auf. Der Rollwagen (8) ist derart ausgebildet, daß das Gelenk (7) auf der Mittellinie zwischen den Rollensätzen (25) und (26) liegt, so daß auf Grund dieser Symmetrie keine Kippkräfte auf den Rollwagen (8) wirken und so der Rollwagen sicher und ohne Verkanten in den Schienen (9) geführt ist.

Mit dem Gelenk (7) ist eine Stellschraube (27) verbunden, mit der die Höhenlage des oberen Wandteiles (3) auf einfache Weise einstellbar ist, so daß immer ein dichter Sitz des oberen Wandteiles (3) gewährleistet ist. Im geschlossenen Zustand setzt sich das obere Wandteil (3) mit einem Auflager (28) auf eine an den Stützen (10) angeordnete Stützfläche (29) auf, so daß die Rollwagen (8) entlastet sind.

**Patentansprüche**

1. Vorrichtung zum gleichzeitigen Öffnen bzw. Schließen eines unteren und eines oberen Wandteiles einer Bordwand (1), insbesondere der Bordwand eines Lastfahrzeuges, wobei das untere Wandteil (4) um eine untere Schwenkachse (5) nach unten schwenkbar ist und das darüber angeordnete obere Wandteil (3) nach oben aufklappbar und an seinem unteren Randabschnitt gelenkig mit Hebeln (11) verbunden ist, die jeweils um zur Schwenkachse parallele Drehachsen drehbar an seitlichen Stützen (16) angeordnet sind, und wobei ein das untere und das obere Wandteil verbindendes Zugmittel über an den Stützen angeordnete obere und untere Umlenkelemente (31, 32) verschiebbar geführt ist, das mit seinem unteren Endabschnitt mit dem unteren Wandteil im Abstand von dessen Schwenkachse und mit seinem oberen Endabschnitt mit den Hebeln im Abstand von deren Drehachse (12) verbunden ist und wobei die Drehachsen zwischen oberen und unteren Umlenkelementen angeordnet sind, dadurch gekennzeichnet, daß das Zugmittel als Gliederkette (16) ausgebildet ist, die über einen einzigen oberen Umlenkstift (31) geführt ist, und daß jeweils das obere Kettenende der Gliederkette mit dem zugeordneten Hebel (11) in einem Abstand (B) von den Drehachsen (12) der Hebel verbunden ist, der etwa um die Länge (L) des letzten Kettengliedes (33) größer als der Abstand (b) des oberen Umlenkelementes (31, 31a, 31b) von den Drehachsen ist.

2. Vorrichtung nach Anspruch 1, dadurch gekennzeichnet, daß jeweils ein unterer Umlenkstift (32), eine untere Führungsrolle, eine untere Umlenkrolle od. dgl. im Abstand oberhalb der Schwenkachse (5) des unteren Wandteiles (4) angeordnet ist, der größer als der Abstand des Befestigungspunktes des unteren Kettenendes von der Schwenkachse des unteren Wandteiles ist.

3. Vorrichtung nach Anspruch 1 oder 2, dadurch gekennzeichnet, daß die Gliederkette (16) als Rollengliederkette ausgebildet ist.

4. Vorrichtung nach einem der Ansprüche 1 bis 3, dadurch gekennzeichnet, daß die Umlenkstifte (31, 32) als die Gliederkette (16) führende Führungsritzel (14) ausgebildet sind.

5. Vorrichtung nach einem der Ansprüche 1 bis 4, dadurch gekennzeichnet, daß die Zahnritzel (13) mit ihren Drehachsen (12), die Umlenkstifte (31, 32), die Umlenkrollen (31a), die Führungsritzel (14) und die Gliederkette (16) im Innern der Stützen (10) angeordnet sind.

6. Vorrichtung nach einem der Ansprüche 1 bis 5, dadurch gekennzeichnet, daß das obere Wandteil (3) an seinem oberen Randabschnitt durch ein Gelenk (7) mit einem Schlitten, einem Rollwagen (8) od. dgl. verbunden ist, der in oberen, seitlichen Schienen (9) verschiebbar geführt ist, daß der Rollwagen zwei hintereinander angeordnete Rollensätze (25 und 26) aufweist und daß das Gelenk (7) auf der Mittellinie zwischen den Rollensätzen angeordnet ist.


## Claims

1. A device for the simultaneous opening or closing respectively of a lower and of an upper wall part of a side wall (1), more especially of the side wall of a goods vehicle, in which the lower wall part (4) is swingable downwards about a lower swivel axis (5) and the upper wall part (3) arranged thereabove is capable of being swung open upwardly and is connected at its lower edge portion hingedly to levers (11) which are respectively arranged on lateral supports (16) so as to be rotatable about axes of rotation parallel to the swivel axis, and in which traction means connecting the lower and the upper wall part is displaceably guided by way of upper and lower deflection elements (31, 32) arranged on the supports, is connected by its lower end portion to the lower wall part at a spacing from the swivel axis thereof and is connected by its upper end portion to the levers at a spacing from the axis or rotation (12) thereof and in which the axes of rotation are arranged between upper and lower deflection elements, characterised in that the traction means is designed as a link chain (16) which is guided by way of a single upper deflection pin, and in that in each case the upper chain end of the link chain is connected to the associated lever (11) at a spacing (B) from the axes of rotation (12) of the levers which is larger approximately by the length (L) of the final chain link (33) than the spacing (b) of the upper deflection element (31, 31a, 31b) from the axes of rotation.

2. A device according to claim 1, characterised in that in each case a lower deflection pin (32), a lower guide roller, a lower deflection pulley or the like is arranged at a spacing, above the swivel axis (5) of the lower wall part (4), which is larger than the spacing of the fastening point of the lower chain end from the swivel axis of the lower wall part.

3. A device according to claim 1 or 2, characterised in that the link chain (16) is designed as a roller link chain.

4. A device according to one of claims 1 to 3, characterised in that the deflection pins (31, 32) are designed as guide pinions (14) which guide the link chain (16).

5. A device according to one of claims 1 to 4, characterised.in that the pinions (13) with their axes of rotation (12), the deflection pins (31, 32), the deflection rollers (31a), the guide pinions (14) and the link chain (16) are arranged in the interior of the supports (10).

6. A device according to one of claims 1 to 5, characterised in that the upper wall part (3) is connected, at its upper edge portion, by a hinge (7), to a sliding carriage, a rolling trolley (8) or the like which is displaceably guided in upper lateral rails (9), in that the rolling trolley has two roller sets (25 and 26) arranged one behind the other and in that the hinge (7) is arranged on the centre line between the roller sets.


## Revendications

1. Dispositif pour l'ouverture ou la fermeture simultanée des parties inférieure et supérieure d'une ridelle (1), notamment sur un véhicule de transport, camion ou utilitaire, dans lequel la partie inférieure (4) s'articule vers le bas autour d'un axe de charnière (5) porté par un montant latéral (10), alors que la partie supérieure (3) qui surmonte cette partie inférieure est relevable vers le haut, le bord inférieur de cette partie supérieure étant relié de façon articulée à des leviers (11) qui s'articulent à leur tour autour d'axes de pivotement parallèles aux axes de charnière et logés dans les montants latéraux (10), tandis qu'il est prévu un organe de traction (16) qui relie entre elles les parties inférieure et supérieure de la ridelle, cet organe de traction passant autour de goujons de renvoi (31, 32), le tronçon inférieur de l'organe de traction (16) étant fixé à la partie inférieure (4) en un point situé à une certaine distance de l'axe de charnière correspondant, tandis que son tronçon supérieur est relié aux leviers (11) à une certaine distance de l'axe de charnière (12) de cette partie supérieure, les goujons de renvoi (31, 32) étant disposés entre les axes de charnière inférieur et supérieur, ce dispositif étant caractérisé par le fait que l'organe de traction est constitué par une chaîne à maillons (16) qui passe autour d'un unique goujon de renvoi supérieur (31), et que le tronçon terminal supérieur de la chaîne à maillons est relié au levier correspondant (11) à une certaine distance (B) de l'axe d'articulation (12) du levier, laquelle correspond approximativement à la longueur (L) du dernier maillon (33) de la chaîne, augmentée de la distance (b) qui sépare le goujon de renvoi supérieur (31, 31a, 31b) de l'axe d'articulation (12).

2. Dispositif selon la Revendication 1, caractérisé par le fait que, suivant les cas, un goujon inférieur de renvoi (32), un galet inférieur de guidage, — ou un galet inférieur de renvoi ou élément similaire, est prévu à une certaine distance au-dessus de l'axe de charnière (5) de la partie inférieure (4) de la ridelle, cette distance étant supérieure à celle qui sépare les points d'ancrage de l'extrémité inférieure de la chaîne à maillon de l'axe de charnière de la partie inférieure de la ridelle.

3. Dispositif selon l'une ou l'autre des Revendications 1 ou 2, caractérisé par le fait que la chaîne à maillons (16) est constituée par une chaîne à rouleaux (16).

4. Dispositif selon l'une quelconque des Revendications 1 à 3, caractérisé par le fait que les goujons de renvoi (31, 32) sont constitués par des pignons dentés (14) de guidage de la chaîne à maillons (16).

5. Dispositif selon l'une quelconque des Revendications 1 à 4, caractérisé par le fait que les pignons dentés (13) ainsi que leurs axes de rotation (12), les goujons de renvoi (31, 32), les galets de renvoi (31a), les pignons de guidage (14) et la chaîne à maillons (16) sont logés à l'intérieur des montants (10).

6. Dispositif selon l'une quelconque des Revendications 1 à 5, caractérisé par le fait que la partie supérieure (3) de la ridelle est reliée à son bord supérieur par une articulation (7) à un chariot (8), un coulisseau ou élément analogue, lequel est guidé dans des rails supérieurs horizontaux (9), que le chariot comprend deux jeux de galets disposés en tandem (25, 26) et que l'articulation (7) est située sur l'axe vertical médian entre les jeux de galets.

Fig.1

Fig.2

Fig. 3

Fig. 4

Fig. 5

Fig. 6

Fig. 7

Fig. 8

Fig. 9

Fig.10

Fig.11

Fig. 12